# EUROPÄISCHE PATENTSCHRIFT

(11) **EP 3 065 936 B1**
(45) Veröffentlichungstag und Bekanntmachung des Hinweises auf die Patenterteilung: **19.08.2020**
(21) Anmeldenummer: 14789838.1
(22) Anmeldetag: 28.10.2014
(51) Int. Cl.: B29C 48/16, B29C 48/285, B29C 70/04, B29C 70/50, B29B 17/04

(54) **VERFAHREN ZUR HERSTELLUNG EINES HALBZEUGS ZUR VERARBEITUNG ZU EINEM CFK-BAUTEIL AUS KOHLEFASERABFÄLLEN**
METHOD FOR PRODUCING A SEMI-FINISHED PRODUCT TO BE MADE INTO A CFRP COMPONENT, FROM CARBON-FIBRE SCRAP
PROCÉDÉ DE FABRICATION D'UN PRODUIT SEMI-FINI EN VUE DU TRAITEMENT DONNANT UN COMPOSANT EN MATIÈRE PLASTIQUE RENFORCÉE PAR DES FIBRES DE CARBONE À PARTIR DE DÉCHETS DE FIBRES DE CARBONE

(30) Priorität: 05.11.2013 DE 102013222426
(43) Veröffentlichungstag der Anmeldung: 14.09.2016
(73) Patentinhaber: Bayerische Motoren Werke Aktiengesellschaft, 80809 München (DE)
(72) Erfinder: DAUNER, Willy, 86368 Gersthofen (DE); HUBER, Stephan, 81925 München (DE)
(86) Internationale Anmeldenummer: PCT/EP2014/073045
(87) Internationale Veröffentlichungsnummer: WO 2015/067499

(56) Entgegenhaltungen:
- EP-A1- 2 233 517
- EP-A2- 0 535 650
- WO-A1-03/078143
- DE-A1-102011 115 966
- DE-C1- 19 514 543
- SCHIEBISCH J ET AL: "VERSTARKEN VON THERMOPLASTEN MIT CFK-RECYCLAT", PLASTVERARBEITER, HUETHIG GMBH, HEIDELBERG, DE, vol. 45, no. 10, 1 October 1994 (1994-10-01), pages 104, 106-110, XP000477141, ISSN: 0032-1338

## Beschreibung

Die Erfindung betrifft ein Verfahren zur Herstellung eines Halbzeugs zur Verarbeitung zu einem CFK-Bauteil (kohlefaserverstärktes Bauteil) gemäß Anspruch 1. Die Erfindung betrifft insbesondere ein kontinuierliches Verfahren zur Herstellung eines CFK-Bauteils bei dem ein Zwischenschritt die Herstellung eines Recyclat-Halbzeuges ist.

Im Stand der Technik ist bekannt, Kunststoffe einem Rezyklat-Prozess zuzuführen, um diese in einem späteren Weiterverarbeitungsprozess wieder zu verwenden. So wird z.B. in der DE 19 710 098 A1 ein Verfahren offenbart zur Erzeugung von Polyethylen-Terephthalat (PET)-Rezyklat aus Flakes, sowie ein nach dem Verfahren erzeugtes PET-Produkt. PET-Produkte finden vielfältig Verwendung, bspw. als Flaschen, qualifizierte Folien und Fasern, medizinische Geräte, insbesondere medizinische Spritzen und medizinische Behältnisse. Dabei ist man bestrebt, die Produkte möglichst vollständig im Wertstoffkreislauf zu führen. Ein wesentliches Problem besteht allerdings darin, dass mit zunehmendem Anteil an PET-Rezyklat die Qualität der Produkte verändert wird.

Formteile aus polymeren Werkstoffen, die insbesondere im Innenraum von Kraftfahrzeugen zur Anwendung kommen, müssen hohe mechanische und umwelttechnische Anforderungen erfüllen und vor allem bzgl. ihrer mechanischen Eigenschaften, ihrer Oberflächeneigenschaften, ihres Alterungs- sowie ihres Geruchs- und Emissionsverhaltens den Anforderungen genügen. Es ist bekannt, dass für die Herstellung von Bauteilen und Formteilen für den Kraftfahrzeuginnenbereich verschiedene polymere Werkstoffe verwendet werden. Ein typisch verwendeter Werkstoff ist ein glasfaserverstärktes ABS/PC-Material (Polymer-Blend aus Acryl-Butadien/Styrol-Copolymer und Polycarbonat). Dieser Werkstoff weist jedoch eine unzureichende UV-Beständigkeit, schlechte Fließfähigkeiten, ein schlechtes Wärmealterungsverhalten (Zähigkeit und Bruchdehnung nach Wärmelagerung) und ungünstige Oberflächeneigenschaften sowie schlechte Schaumhaftung sowie insbesondere ein schlechtes Geruchsverhalten auf. Unter Geruchsverhalten bei Kunststoffen wird die Neigung verstanden, dass nach einer Klimalagerung und insbesondere einer Temperaturbeaufschlagung von festgelegter Dauer und festgelegter Temperatur die Teile dazu neigen, flüchtige Bestandteile abzugeben, die ein Mensch wahrnehmen kann.

Im Stand der Technik ist es ferner bekannt für mechanisch stabile Bauteile und Formteile, faserverstärkte Formkunststoffe einzusetzen. Als Verstärkungsfasern werden bei der Herstellung von Konstruktionsteilen zum Beispiel Glasfasern, Naturfasern oder Carbonfasern bzw. Füllstoffe verwendet. Allerdings sind Fasermaterialien, wie Glasfasern teuer. Ein weiterer Nachteil von Glasfasern besteht darin, dass diese relativ schwer sind.

Bei der Herstellung von Bauteilen wie zum Beispiel Fahrzeugteilen sowie Fahrzeuginnenteilen, insbesondere bei der Herstellung von Profilen, werden im Stand der Technik Extrusions-, Coextrusions- und Pultrusionsverfahren eingesetzt. Allerdings sind die hohen Kosten immer noch ein limitierender Faktor. Die Herstellung von kohlefaserverstärkten Bauteilen mit solchen Verfahren ist daher erheblich von den Materialkosten und der verwendeten Menge der Fasern beeinflußt. Es ist ferner bekannt, Kohlefaserabfälle bei der Herstellung einzusetzen, insbesondere bei der Herstellung von Vliesen, um die Kosten zu senken. Die im Stand der Technik bekannten Verarbeitungsmethoden werden aber limitiert durch diskontinuierliche Verfahren. So werden jeweils definierte Batch-Mengen im diskontinuierlichen Prozess verarbeitet.

Es ist daher wünschenswert, ein Herstellungsverfahren bereitzustellen, welches kontinuierlich arbeitet und mit dem größere Mengen an Duroplasten oder Thermoplasten verarbeitet werden können.

Weitere Verfahren und Vorrichtungen sind aus den Offenbarungen der EP 2 233 517 A1, DE 10 2011 115966 A1, EP 0 535 650 A2, der WO 03/078143 A1 und der DE 195 14 543 C1 vorbekannt. Ferner ist ein Verfahren zum Recycling von faserverstärkten Materialen aus dem Artikel "Verstärken von Thermoplasten mit CFK-Recyclat" von Jens Schiebisch und Gottfried W. Ehrenstein bekannt, der im Oktober 1994 in Nr. 10 der Zeitschrift "PLASTVERARBEITER" erschienen ist.

Es ist daher Aufgabe der vorliegenden Erfindung, vorbesagte Nachteile zu überwinden und insbesondere ein kontinuierliches Verfahren mit kurzen Prozesszeiten bereit zu stellen, welches eine kostengünstige Herstellung von Halbzeugen und Bauteilen aus polymeren Werkstoffen mit guten mechanischen Endeigenschaften ermöglicht.

Diese Aufgabe wird mit einem Verfahren nach Anspruch 1 gelöst. Der Grundgedanke der Erfindung besteht darin, geeignete Kohlefaserabfälle (Carbonfaserabfälle) zusammen mit einem Kunststoffpolymer einem Zerkleinerer und Extruder zuzuführen, um daraus eine Carbonfaser-Polymermasse zu erzeugen und diese in einem Harz zu tränken. Daraus wird ein Recyclat-Prepreg erhalten, welches in geeignete Formen und/oder Längen gebracht wird. Diese Recyclat-Prepregs können dann in einem weiteren Teilschritt mittels Fließpressverfahren in eine endkonturnahe Form gebracht werden.

Hierzu kann ein Extrusions-, Coextrusions- oder Pultrusions-Verfahrens oder dergleichen verwendet werden, um daraus Formteile wie Profile oder Fahrzeug-Interieur-Teile herzustellen.

Ein Aspekt der Erfindung besteht demnach darin, kohlenfaserverstärkte Kunststoffabfälle bzw. kohlenfaserverstärkte Kunststoffmaterialien mechanisch derart in einem Extruder zu zerkleinern, dass daraus ein Kohlefaser-Rezyklat hergestellt wird, um dieses mit einem Duroplast oder Thermoplast in einem gewünschten Mischungsverhältnis zu einer Polymermasse zu vermischen. Das Mischungsverhältnis und die Carbonfaserabfallgröße hat Einfluß auf die gewünschten mechanischen und technischen Eigenschaften des späteren Formteils. Der Zerkleinerungsgrad kann vorzugsweise über die Schneckengeometrie bzw. über die Schneckenlänge eingestellt werden.

Bevorzugt wird ein Verfahren vorgeschlagen, bei dem als Kunststoffpolymer entweder ein Thermoplast oder ein Duroplast verwendet werden.

Erfindungsgemäß erfolgt das Zerkleinern von in den Extruder zugeführten Kohlefaserabfälle bzw. Carbonfaserverschnitt unmittelbar in dem Extruder. Auf diese Weise kann ein kostenintensives Vorverkleinern und damit ein gesonderter Prozessschritt vermieden werden. In einer bevorzugten Ausgestaltung wird demnach ein solcher Extruder zur Zerkleinerung der Kohlefaserabfälle verwendet, der eine auf den gewünschten Zerkleinerungsgrad angepasste Schneckengeometrie aufweist. Der Zerkleinerungsgrad lässt sich beispielsweise über die Schneckenlänge oder über die Form der Schneckengeometrie einstellen.

Alternativ kann im Extruder auch eine Zerkleinerungsvorrichtung so angeordnet werden, dass beim Betätigen der Extruderschnecke die Zerkleinerung gleichzeitig über die Zerkleinerungsvorrichtung erfolgt.

In einer bevorzugten Ausbildung der Erfindung wird die extrudierte Polymermasse mit einem Harz getränkt, um daraus ein Recyclat-Prepreg zu bilden, welches in geeignete Formen und/oder Längen gebracht werden kann. Erfindungsgemäß wird das Recyclat-Prepreg nach dem Verlassen des Extruders in eine definierte Form gebracht.

Erfindungsgemäß ist ferner vorgesehen, dass das in Form gebrachte Recyclat-Prepreg in ein endkonturnahes Halbzeug, vorzugsweise mittels Druckumformen wie Fließpressen in einem Werkzeug umgeformt wird.

Hierzu wird das Recyclat-Prepreg zur Druckumformung einer formgebenden Kavität eines Presswerkzeugs zugeführt und mittels eines Pressstempels gepresst. Erfindungsgemäß lassen sich die zuvor genannten Teilschritte in einem kontinuierlichen Fließbandprozess oder in einer Fertigungsstraße miteinander in Serie schalten.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt.

Es zeigen:

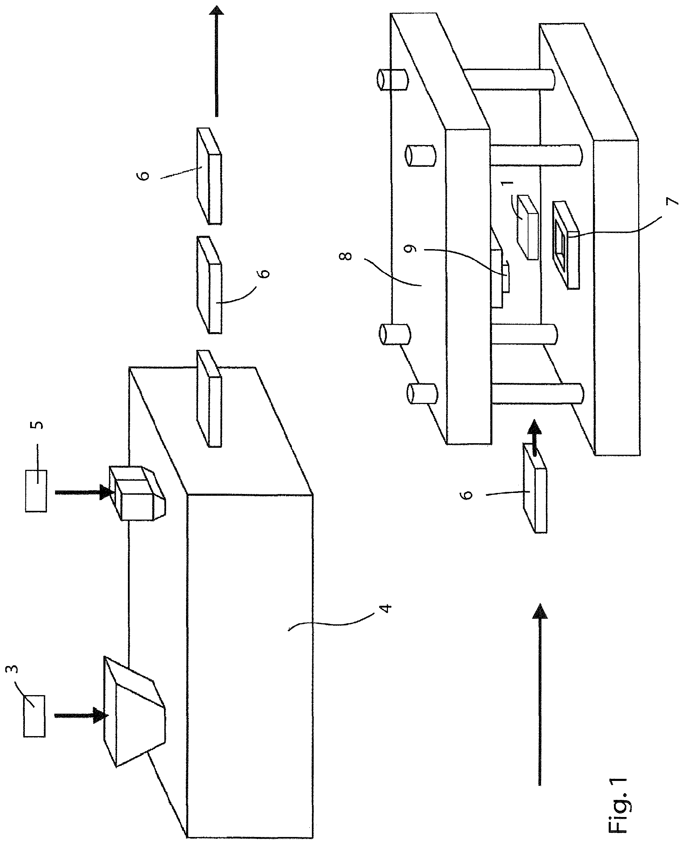

Fig. 1 Eine schematische Ansicht des erfindungsgemäßen Verfahrens zur Herstellung von Recyclat-Prepregs zu CFK-Bauteile.

In Fig. 1 zeigt die schematische Abfolge der Schritte des erfindungsgemäßen Verfahrens zur Herstellung eines CFK-Bauteils mittels eines Extruders (4) in einem Extrusionsprozess und einem nachfolgenden Druckumformprozess.

Das Verfahren nach diesem Ausführungsbeispiel erfolgt in einem kontinuierlichen Prozess mit den folgenden Schritten:
Zunächst werden Kohlefaserabfälle (3) einem Extruder (4) zugeführt. In dem Extruder (4) werden die Kohlefaserabfälle (3) mittels der Extruderschnecke zerkleinert. Ferner wird ein Kunststoffpolymer (5) zu dem Extruder (4) hinzudosiert.

Die Zuführung der Kohlefaserabfälle (3) und des Kunststoffpolymers (5) in den Extruder (4) erfolgt jeweils über Zuführvorrichtungen (10), die unmittelbar mit der Extruderschnecke in Verbindung stehen.

Mittels Zerkleinerung der Kohlefaserabfälle (3) und Vermischen der zerkleinerten Abfälle mit dem Kunststoffpolymer wird eine Polymermasse erzeugt. Die Polymermasse wird mit einem Harz getränkt, um daraus ein Recyclat-Prepreg (6) zu bilden, welches in geeignete Formen und/oder Längen gebracht wird. Das Recyclat-Prepreg (6) wurde wie in der Figur 1 ersichtlich, nach dem Verlassen des Extruders (4) in definierten Abständen zu einzelnen voneinander getrennten Recyclat-Prepregs (6) abgelängt. Lediglich beispielhaft sind vier geformte Recyclat-Prepregs (6) in Fertigungsrichtung dargestellt. In dem Verfahren kann als Kunststoffpolymer (5) ein Thermoplast-Kunststoff oder ein Duroplast-Kunststoff verwendet werden.

Das Zerkleinern der Kohlefaserabfälle (3) erfolgt unmittelbar in dem Extruder (4). In dem vorliegenden Ausführungsbeispiel wird ein Extruder (4) zur Zerkleinerung der Kohlefaserabfälle (3) verwendet, der eine auf den gewünschten Zerkleinerungsgrad angepasste Schneckengeometrie aufweist.

Erfindungsgemäß kann auch ein Einstell- und Anpassmechanismus vorgesehen werden, um eine Zerkleinerungsvorrichtung mit dem Schneckenförderer einstellbar zusammenwirken zu lassen, um so den gewünschten Zerkleinerungsgrad passend einzustellen.

Das verfahrensgemäße Ausführungsbeispiel ist ferner so ausgebildet, dass die abgelängten und in Form gebrachten Recyclat-Prepregs (6) in ein endkonturnahes Halbzeug mittels Fließpressen in einem Werkzeug (8) umgeformt werden und zwar indem diese einer formgebenden Kavität (7) eines Presswerkzeugs (8) zugeführt werden und mittels eines Presstempels (9) gepresst werden. Nach dem Fließpressen härtet das Halbzeug (1) im Werkzeug (8) aus und wird nach dem Aushärten aus diesem entformt.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht.

## Patentansprüche

1. Verfahren zur Herstellung eines Halbzeuges (1) in einem kontinuierlichen Prozess und Verarbeitung zu einem carbonfaserverstärkten Bauteil mit wenigstens den folgenden Schritten:
a. Zuführen von Carbonfaserverschnitt (3) in einen Extruder (4);
b. Zudosieren eines Kunststoffpolymers (5) zu dem Extruder (4);
c. Zerkleinerung des Carbonfaserverschnitts (3) unmittelbar in dem Extruder (4) und Vermischen des zerkleinerten Carbonfaserverschnitts mit dem Kunststoffpolymer (5) zu einer Polymermasse;
d. Tränken der Polymermasse mit einem Harz, um daraus ein Recyclat-Prepreg (6) zu bilden ;
e. Umformen des Recyclat-Prepregs (6) in eine definierte Form nach dem Verlassen des Extruders (4);
f. Fließpressen des in die definierte Form gebrachten Recyclat-Prepregs (6) in einem Presswerkzeug (8) in ein endkonturnahes Halbzeug (1), wobei das Recyclat-Prepreg (6) zum Fließpressen einer formgebenden Kavität (7) eines Presswerkzeugs (8) zugeführt wird und mittels eines Presstempels (9) gepresst wird und
g. Aushärten des Halbzeugs (1) nach dem Fließpressen in dem Presswerkzeug (8).

2. Verfahren nach Anspruch 1, **dadurch gekennzeichnet, dass** als Kunststoffpolymer (5) ein Thermoplast verwendet wird

3. Verfahren nach Anspruch 1, **dadurch gekennzeichnet, dass** als Kunststoffpolymer (5) ein Duroplast verwendet wird.

4. Verfahren nach Anspruch 1, **dadurch gekennzeichnet, dass** ein solcher Extruder (4) zur Zerkleinerung des Carbonfaserverschnitts (3) verwendet wird, der eine auf den gewünschten Zerkleinerungsgrad angepasste Schneckengeometrie aufweist.

5. Verfahren nach einem der vorhergehenden Ansprüche 1 bis 4, **dadurch gekennzeichnet, dass** das Recyclat-Prepreg (6) nach dem Verlassen des Extruders (4) in definierten Abständen abgelängt wird.

## Claims

1. Method for producing a semi-finished product (1) in a continuous process and for processing so as to form a carbon fibre reinforced component (2), comprising at least the following steps:
a. feeding carbon fibre cutting waste (3) into an extruder (4);
b. metering a plastics polymer (5) into the extruder (4) ;
c. comminuting the carbon fibre cutting waste (3) immediately into the extruder (4) and mixing the comminuted carbon fibre cutting waste (3) and the plastics polymer (5) so as to form a polymer mass;
d. impregnating the polymer mass with a resin so as to form therefrom a recycled-material prepreg (6) ;
e. forming the recycled-material prepreg (6) to a defined shape upon exiting the extruder (4);
f. impact-extruding the recycled-material prepreg (6) brought to the defined shape in a press tool (8) so as to form a semi-finished product (1) with the approximate final contour, wherein the recycled-material prepreg (6) for impact-extruding is fed to a shape-imparting cavity (7) of a press tool (8) and is pressed by means of a press die (9); and
g. curing the semi-finished product (1) in the press tool (8) after the impact-extruding.

2. Method according to Claim 1, **characterized in that** a thermoplastics material is used as the plastics polymer (5).

3. Method according to Claim 1, **characterized in that** a thermosetting plastics material is used as the plastics polymer (5).

4. Method according to Claim 1, **characterized in that** an extruder (4) which has a screw geometry adapted to the desired degree of comminution is used for the comminution of the carbon fibre cutting waste (3).

5. Method according to one of the preceding Claims 1 to 4, **characterized in that** the recycled-material prepreg (6) after exiting the extruder (4) is cut to length at defined spacings.

## Revendications

1. Procédé de fabrication d'un produit semi-fini (1) dans un processus continu et transformation en un composant renforcé par des fibres de carbone, comprenant au moins les étapes suivantes :
a. l'introduction d'une coupe de fibres de carbone (3) dans une extrudeuse (4) ;
b. l'ajout d'un polymère de matière plastique (5) à l'extrudeuse (4) ;
c. le broyage de la coupe de fibres de carbone (3) directement dans l'extrudeuse (4) et le mélange de la coupe de fibres de carbone broyée avec le polymère de matière plastique (5) en une masse de polymère ;
d. l'imprégnation de la masse de polymère avec une résine, afin de former à partir de celle-ci un préimprégné de produit recyclé (6) ;
e. le façonnage du préimprégné de produit recyclé (6) en une forme définie après la sortie de l'extrudeuse (4) ;
f. le filage du préimprégné de produit recyclé (6) mis sous la forme définie dans un outil de pressage (8) en un produit semi-fini proche du contour final (1), le préimprégné de produit recyclé (6) étant introduit pour le filage dans une cavité de façonnage (7) d'un outil de pressage (8), et pressé au moyen d'une matrice de pressage (9), et
g. le durcissement du produit semi-fini (1) après le filage dans l'outil de pressage (8).

2. Procédé selon la revendication 1, **caractérisé en ce qu'**un thermoplastique est utilisé en tant que polymère de matière plastique (5).

3. Procédé selon la revendication 1, **caractérisé en ce qu'**un duroplastique est utilisé en tant que polymère de matière plastique (5).

4. Procédé selon la revendication 1, **caractérisé en ce qu'**une extrudeuse (4) qui présente une géométrie de vis adaptée au degré de broyage souhaité est utilisée pour le broyage de la coupe de fibres de carbone (3).

5. Procédé selon l'une quelconque des revendications 1 à 4 précédentes, **caractérisé en ce que** le préimprégné de produit recyclé (6) est sectionné à des intervalles définis après la sortie de l'extrudeuse (4).
